(19) Europäisches Patentamt / European Patent Office / Office européen des brevets

(11) **EP 1 746 439 A2**

(12) **EUROPÄISCHE PATENTANMELDUNG**

(43) Veröffentlichungstag:
**24.01.2007 Patentblatt 2007/04**

(51) Int Cl.:
***G01T 1/178*** (2006.01)

(21) Anmeldenummer: **06015135.4**

(22) Anmeldetag: **20.07.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **21.07.2005 DE 102005034732**

(71) Anmelder: **Horn, Wolfgang, Dr.- Ing.**
**08301 Bad Schlema (DE)**

(72) Erfinder: **Horn, Wolfgang, Dr.- Ing.**
**08301 Bad Schlema (DE)**

(74) Vertreter: **Findeisen Hübner Neumann Seerig**
**Pornitzstraße 1**
**09112 Chemnitz (DE)**

(54) **Verfahren zur Ermittlung der Luftwechselrate**

(57) Die Erfindung betrifft ein Verfahren zur Ermittlung der Luftwechselrate.

Der Erfindung liegt die Aufgabe zugrunde, eine Messanordnung mit Berechnungsmethode so auszugestalten, um bei Raumluftmessungen und bei Messungen in Apparaturen, z.B. bei der Untersuchung von Materialien,

| | | | |
|---|---|---|---|
| - die Luftwechselrate | n | 1/h | und |
| - den tatsächlichen Radonzufluss | q | Bq/s | bzw. |
| spezifisch pro Volumen | | Bq/(m³s) | |
| Fläche | | Bq/(m²s) | |
| Masse | | Bq/(kgs) | |

zu bestimmen.

Erfindungsgemäß wird die Aufgabe dadurch gelöst, dass das radioaktive Edelgas Radon als Tracergas verwendet wird und der sich einstellende Radonkonzentrationsverlauf mit empfindlicher Radonmesstechnik so lange erfasst wird, dass sich mindestens eine beschränkt monoton wachsende bzw. fallende Kurve mit über den jeweils betrachteten Messverlauf ausreichend konstanten Parametern Luftwechselrate (n) und Radonzufluss (q) ausbilden kann, aus der diese beiden Parameter ermittelt werden können.

Fig.2

EP 1 746 439 A2

**Beschreibung**

Die Erfindung betrifft ein Verfahren zur Ermittlung der Luftwechselrate.

Unter Luftwechselrate n [h$^{-1}$] versteht man vereinfacht den Volumenanteil an Luft, der pro Zeiteinheit durch Außenluft in einem Raum ausgetauscht wird. Eine Luftwechselrate von z.B. n = 0,5 h$^{-1}$ bedeutet, dass die Raumluft in der Stunde zur Hälfte durch Lüften mit (frischer Außen-) Luft ausgetauscht wird. Je geringer die Luftwechselrate ist, desto höher ist im Allgemeinen die Schadstoffkonzentration in der Raumluft.

Die Ermittlung der Luftwechselrate in der Raumluft ist mit verschiedenen Tracergasen möglich und stellt - abgesehen von Kosten und gerätetechnischem Aufwand - kein besonderes Problem dar.

Einen guten Überblick über Lüftungseffektivität und über Luftwechselmessungen gibt Raatschen (Raatschen, Willigert: Was ist Lüftungseffektivität? Sonderdruck aus Fachzeitschrift für technische Gebäudeausrüstung: Klima, Kälte, Heizung, Energie. Verlag C.F. Müller Karlsruhe. Heft 5/6/7-8/88.). Danach kann die Luftwechselrate mit Tracergas(en) ermittelt werden. Folgende Methoden werden angewandt:

(a) Luftwechselmessungen nach der Abklingmethode für einzelne Zonen
(b) Spurengasmessungen bei konstanter Emissionsrate
(c) Luftaustauschmessungen zwischen mehreren Zonen mit einem Spurengas
(d) Messung des Luftaustauschs zwischen mehreren Zonen mit mehreren Spurengasen.

Ein Nachteil dieser Methoden ist, dass die Nutzung des Gebäudes eingeschränkt wird und ein hoher technischer Aufwand erforderlich ist. Es wird immer mindestens ein Spurengas verwendet.

Bei der Abklingmethode kann aus der Schnelligkeit des Abfalls der Spurengaskonzentration auf die Luftwechselrate geschlossen werden. Dazu sind möglichst gleichbleibende Nutzungsbedingungen erforderlich. Kurzfristige, extreme Einflüsse auf das Gebäude wie voller Luftdurchzug bedeuten in der Regel das Ende eines Messvorganges. Messungen über mehrere Tage sind immer neu einzustellen oder oftmals gar nicht möglich.

(e) Luftwechselmessung durch Überdruck/Unterdruck im Gebäude

Mit (e) wird versucht, die Luftwechselrate näherungsweise zu bestimmen. Wegen vieler Einflussfaktoren ist aber lediglich ein Näherungswert erreichbar:

n = n$_{50}$/20 (n$_{50}$ - Luftwechsel bei 50 Pascal Luftdruckdifferenz). Dieser Wert reicht für höhere Genauigkeiten und belastbare Beurteilungen (Gutachten, Verhandlungen vor Gericht) nicht aus.

Als Spurengase werden bislang etwa 20 verschiedene Gase benutzt. Sie müssen mehreren Forderungen genügen:

ungiftig, chemisch inaktiv,
annehmbarer Preis,
keine Oberflächenadsorption,
großer Konzentrationsbereich,
leicht und schnell messbar.

Neben den technischen Spurengasen (z. B. SF$_6$ Schwefelhexafluorid) könnten auch "natürliche" Gase wie der CO$_2$- oder der Feuchtegehalt der Raumluft zur Auswertung herangezogen werden. Teilweise ist dies möglich. Sie haben jedoch wesentliche Nachteile:

· Die Konzentrationsunterschiede dieser Gase/Stoffe bewegen sich in engen Grenzen.
· Der CO$_2$-Gehalt kann nicht beliebig erhöht werden.
· Der CO$_2$-Gehalt und die relative Luftfeuchte erhöhen sich in der Regel nur dann, wenn
· Personen anwesend sind. Nach der Nutzung eines Raumes durch Personen klingt der Messwert meist ab, ähnlich wie bei der Abklingmethode.

Über Luftwechselmessungen mittels CO$_2$ wird in Lausmann (Lausmann, Detlef; Braun, Peter: Luftwechselbestimmung mittels CO2. In: AGÖF 6. Fachkongress 2001, Umwelt, Gebäude & Gesundheit, Seiten 344-347. 20.-21.09.2001 in Nürnberg. Arbeitsgemeinschaft Ökologischer Forschungsinstitute) berichtet. Eine relativ konstante CO$_2$-Zufuhr stellt sich durch die Nutzer bei geringer Lüftung von selbst ein, wenn im Schlafzimmer am Abend vorher gut durchlüftet wurde. Am nächsten Tag soll früh möglichst nicht gelüftet werden, um die Abklingkurve ausnutzen zu können. In anderen Räumen können sich erwartungsgemäß keine ausreichend guten Konzentrationsverläufe aufbauen. Über in den Nachtstunden nicht genutzten Räumen wie in Kindergärten/Schulen baut sich kein Messpotential auf, solche Räume können auf diese Weise nicht untersucht werden.

Die Ausarbeitung von Raatschen (a.a.O.) enthält eine sehr ausführliche Literaturzusammenstellung. Sie dürfte den gesamten bekannten Wissensstand bis 1988 auf diesem Gebiet umreißen. Die Arbeit von Lausmann et al. (a.a.O.) und Münzenberg et al. (Münzenberg, Uwe; Thumulla, Jörg: Raumklimaaufzeichnungen als baubiologisches Werkzeug zur Problemlösung von Feuchtigkeit in Gebäuden. In: AGÖF 6. Fachkongress 2001, Umwelt, Gebäude & Gesundheit, Seiten 348-354. 20.-21.09.2001 in Nürnberg. Arbeitsgemeinschaft Ökologischer Forschungsinstitute.) aus dem Jahr 2001 lassen nicht darauf schließen, dass neuere Methoden bekannt sind.

Aus den ausgewerteten Unterlagen der Fachliteratur sind keine Informationen bekannt, dass Radon als Tracergas zur Bestimmung der Luftwechselrate verwendet wird. Vielmehr wurde in Gesprächen mit Vertretern aller deutschen Fachgremien, die sich mit Radon beschäftigen, die einhellige Meinung vertreten, dass "mit Radon keine Bestimmung der Luftwechselrate möglich sei", da es die obigen Anforderungen an die bekannten Tracergase nicht erfüllt.

Diese Aussage lässt sich bis in die jüngste Zeit verfolgen: (Schulz H., Hermann E., Höppner J., Löbner W.: Bewertung des Radonrisikos von Baustandorten. In: Forschung zum Problemkreis "Radon". Vortragsmanuskripte des 17. Statusgespräches Berlin, 14./15.10.2004. BMU Bonn 2005.). Schulz nutzt und verweist bei Untersuchungen von Radon in Gebäuden auf Tracergase "als ein sehr probates Mittel".

Trotz der Meinung, dass mit Radon keine Bestimmung der Luftwechselrate möglich sei, drängt sich Radon als Tracergas auf. Radon hat folgende Vorteile:

(a) ist ständig und überall auf der Welt vorhanden.
(b) ist kostenlos.
(c) ist gleichmäßig in einem Raum verteilt (von selbst, ohne extra Ventilation).
(d) unterliegt keiner nennenswerten Oberflächenadsorption.
(e) ist ein Edelgas und geht somit keine chemischen Verbindungen mit anderen Elementen ein.
(f) liegt oftmals sogar in unerwünscht hohen Konzentrationen vor; große Konzentrationsunterschiede sind möglich.
(g) ist unabhängig von der Anwesenheit von Personen.
(h) ist gleichzeitig das Gas, dessen Konzentrationen man in einem Raum/Gebäude misst, wenn es um die Beurteilung der Radongefährdung in Räumen geht. Umrechnungen oder Vergleiche über andere Gase entfallen.
(i) ist meist in vernachlässigbarer Konzentration in der Außenluft vorhanden. Höhere und selbst geringe Außenluftwerte können bei der Luftwechselermittlung ausreichend genau berücksichtigt oder mit gemessen werden.
(j) hinterlässt in der Umwelt keine nachteiligen Auswirkungen und unterliegt nur dem natürlichen Zerfall.

Radon hat auch Nachteile:

(k) Radon darf nicht zusätzlich in einen Raum durch z. B. eine transportable Radonquelle oder aus dem Baugrund hereingebracht werden. Es ist aus moralischen Gründen völlig ausgeschlossen und nicht vertretbar, auch nur geringfügig Radon absichtlich in einen Raum einzutragen, selbst wenn dieser schon hoch belastet wäre oder diese Radonmenge gesundheitlich unbedenklich wäre.

(l) Damit fehlt die Möglichkeit, gezielt ideale Aufbau- bzw. Abklingkurven für die Auswertung herzustellen. Der Verlauf der Radonkonzentration lässt sich nicht so beeinflussen, dass bestimmte Konzentrationszustände für die Auswertung bzw. Bestimmung der Unbekannten geschaffen werden können. Dies ist offensichtlich der technische Hauptnachteil gegenüber den sonst üblichen Tracergasen.

(m) Man hat nur eine Messwertgröße, die Radonkonzentration. Für die Bestimmung der beiden Unbekannten Luftwechselrate n und Quellstärke q sind jedoch zwei voneinander unabhängige Messwerte oder bestimmte Messvoraussetzungen erforderlich. Dies ist der mathematische Nachteil, den es zu beheben gilt.

Trotz der Nachteile steht hiernach ein Gas zur Verfügung, das gleichzeitig das Tracergas zum Messen als auch der zu untersuchende Schadstoff ist.

Ein Tracergas, das für die Abklingmethode verwendet wird, kann schon nach wenigen Minuten oder aber erst nach ein paar Tagen bis unter die Nachweisgrenze verdünnt sein. Bei Radon als Tracergas kann ebenfalls nach ganz kurzer Zeit die Konzentration auf den Wert der Außenluft abfallen, er kann aber bei geschlossenen Fenstern insbesondere über die Nachtstunden wieder ansteigen. Da Radon als Tracergas ständig vorhanden ist, gibt es somit keine obere Beschränkung für die Messdauer. Messdauer von weniger als 1 Tag (Spotmessung) bis zu ein paar Wochen sind praktikable Zeiträume, um eine Aussage über die Raumbedingungen zu ermöglichen und in dem andererseits mit den gegenwärtig verfügbaren sensiblen Messgeräten genügend genaue Messwerte (trotz Streuung) erreichbar sind. Ähnlich verhält es sich bei Messungen in Apparaturen, bei denen sich in Abhängigkeit von der Nuklidkonzentration und vom Diffusionskoeffizient eine Wachstumskurve aufbaut.

Der Erfindung liegt die Aufgabe zugrunde, eine Messanordnung mit Berechnungsmethode so auszugestalten, um bei Raumluftmessungen und bei Messungen in Apparaturen, z.B. bei der Untersuchung von Materialien.

| | | | | |
|---|---|---|---|---|
| - die Luftwechselrate | | $n$ | $1/h$ | und |
| - den tatsächlichen Radonzufluss | | $q$ | $Bq/s$ | bzw. |
| spezifisch pro | Volumen | $Bq/(m^3 s)$ | | |
| | Fläche | $Bq/(m^2 s)$ | | |
| | Masse | $Bq/(kgs)$ | | |

mit Radon als Tracergas zu bestimmen.

Erfindungsgemäß wird die Aufgabe durch den Hauptanspruch gelöst. Ausgestaltungen sind in den Unteransprüchen dargestellt..

Die Erfindung wird nachfolgend anhand eines Ausführungsbeispieles näher erläutert. Dabei zeigen

Fig. 1    Einzelmesswerte der Radonkonzentration mit Ausgleichskurve und Aufteilung in zwei Messabschnitte,

Fig. 2    Messverlauf der Radonkonzentration in der Raumluft,

Fig. 3    Vereinfachte Darstellung der ansteigenden Radonkonzentrationskurve,

Fig. 4    Unterteilte Darstellung der ansteigenden Radonkonzentrationskurve und

Fig. 5    Luftwechselrate und Quellstärke bei einem Einfamilienhaus.

Bei einer Messdauer ab etwa einem Tag, aber meist schon bei kürzerer Messdauer, gibt es wenigstens einen Zeitabschnitt, in dem sich ein ausreichend weit gekrümmter Kurvenverlauf einstellt. Dieser Verlauf ist beschränkt monoton wachsend bzw. fallend, je nach Luftwechselrate und Radonzufluss. Der Verlauf der Radonkonzentration folgt der Beziehung:

$$Rn_t = Rn_{auß} + (Rn_o - Rn_{auß})e^{-nt} + q(1 - e^{-nt})/n \qquad Gl. 1$$

$Rn_t$      Radonkonzentration zum Zeitpunkt t
$Rn_{auß}$      Radonkonzentration außerhalb des Raumes
$Rn_o$      Radonkonzentration am Beginn der Messkurve

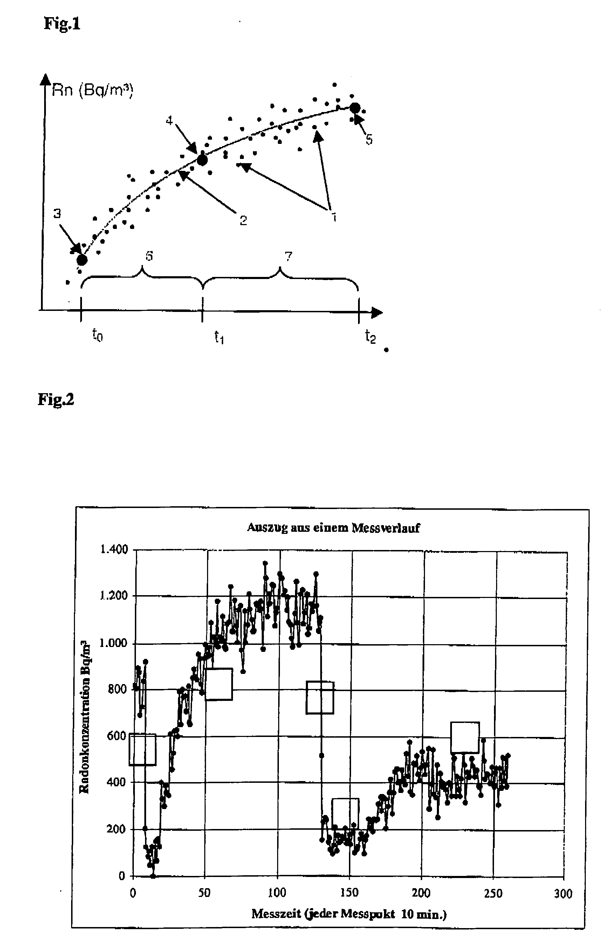

Es ist so lange zu messen, bis sich mindestens ein einzelner Kurvenverlauf - bestehend aus vielen Messpunkten - während eines Messzeitraumes deutlich herausbildet, wie Figur 2 zeigt. Dabei gilt:

· Während des Messzeitraums können sowohl die Luftwechselrate als auch der Radonzufluss mit völlig ausreichender Genauigkeit als konstant angenommen werden.
· In den Kurvenverlauf kann problemlos und genau genug eine Ausgleichskurve eingepasst - gefittet - werden.

Die Auswertung kann wie folgt vorgenommen werden:

a) exakt und direkt mittels mathematischer Formeln oder
b) mit iterativer Berechnung oder
c) durch Probieren mit Einpassen und Vergleichen von Kurvenscharen mit gesetzten Parametern.

Zu a): Bei der exakten Methode wird der Kurvenverlauf in zwei etwa gleich große Kurvenabschnitte geteilt. Damit hat man 2 Kurventeile mit gut definierbaren Anfangs- und Endwerten. Für die zwei Unbekannten Luftwechselrate n und Radonzufluss q stehen jetzt 2 Kurventeile zur Verfügung. Damit ist die Ermittlung der unbekannten Größen mittels Gleichung 1 möglich und die Aufgabe gelöst. Durch Variieren der Anfangs- und Endwerte lässt sich die Genauigkeit noch verbessern, s. nachfolgend b).

Zu b): Bei der iterativen Berechnung wird ebenfalls, z. B. augenscheinlich, eine Ausgleichskurve in den punktförmigen Kurvenverlauf gelegt. Der Anfangs- und der Endpunkt sowie die Luftwechselrate werden näherungsweise geschätzt und für diese Werte wird der Kurvenverlauf mit der Streuung der Einzelwerte um die Kurve errechnet. Die Schätzwerte mit der geringsten Streuung um die Kurve gelten als die am besten geeigneten Parameter der Kurve. Gleichermaßen kann anstelle der Luftwechselrate der Radonzufluss eingesetzt werden; woraus dann die Luftwechselrate ermittelt wird.

Zu c): Die Probiermethode mit Einpassen und Vergleichen (mit Kurvenscharen mit bekannten Parametern) ist möglich, dürfte aber beim Stand der heutigen Technik unüblich sein. Sie ist ungenau und kann bestenfalls zur groben Orientierung gereichen.

Die wesentlichen Nachteile (s. oben): (k) - moralisch, (l) - technisch, (m) - mathematisch sind gelöst:

(k) - Es ist kein zusätzliches Tracergas erforderlich ist - Radon ist immer da.

(l) - Durch empfindliche Messtechnik können genügend und genaue Messverläufe erfasst werden.

(m)- Es gibt gut auswertbare Messverläufe mit genauen Auswertmethoden für die Zielgrößen.

Erfahrungsgemäß sind die Aufbau- und Abklingkurven so gut gekrümmt, dass sich diese immer genau genug trotz der Schwankungen bei Messzeitintervallen von 10 min fitten lassen. Maßgebend ist in der Regel nicht ein einzelner kleiner Kurventeil mit evtl. stärkerer Messwertstreuung, sondern der Gesamtverlauf. Falls offensichtlich stärkere Abweichungen vom Normalverlauf erkennbar sind, muss es eine Ursache geben, die in der Regel auch gefunden werden kann. So ist es ohne Nachteil möglich, relativ kurze Zeiträume, die nicht oder nur schwer auswertbar sind, bei längeren Messzeiträumen aus der Auswertung herauszunehmen. Insgesamt lassen sich die erfassten Zeitabschnitte so genau auswerten, dass die darin integrierte Radonkonzentration nahezu identisch ist mit der tatsächlich errechneten vom Messkurvenverlauf.

Zweckmäßig soll eine Luftwechselmessung möglichst über mehrere Tage verlaufen und sie soll sowohl Wochentage als auch das Wochenende einschließen. Besonders günstig sind etwa 2 bis 3 Wochen; je länger, desto besser. Während des Messzeitraumes von rd. 2 Wochen ist ein Nutzer viel weniger in der Lage, auf die Lüftung Einfluss zu nehmen. Dies ist vorteilhaft gegenüber einem Einsatz der sonstigen Tracergase, bei denen der Zeitverlauf z. B. wegen der Kosten oder Gerätetechnik möglichst kurz gehalten werden muss.

Für die Radonmessung sind die empfindlichsten Messgeräte für das Aufzeichnung von Tagesgängen mit Messintervall von min. 10 min zu empfehlen. Geringere Messzeiten sind nur bei sehr hoher Radonkonzentration und schnellem Wechsel der Lüftungsbedingungen sinnvoll, da sonst die Impulsrate zu klein und die Streuung der Einzelwerte zu groß wird. Geräte (vorzugsweise): alphaGUARD (Genitron Deutschland) und ATMOS (Schweden). Kürzere Zeiträume sind möglich, wenn bestimmte Messbedingungen für die Auswertung hergestellt werden können und die Messziele (z. B. Kontrolle bei Gebäudefertigstellung) durch bestimmte Messprinzipien unterstützt werden.

Diese Messbedingungen können sein:

- bewusst dichtes Schließen aller Türen und Fenster
- höhere Raumtemperatur: 20 bis 30 °C, um die Thermodiffusion zu begünstigen.
- Messen in kalter Jahreszeit (sofern dies zeitlich einzurichten geht).

Durch das Bestimmen der Radonkonzentration und der Quellstärke aus etwa 5 bis durchaus 30 und mehr Zeitabschnitten kann die Quellstärke ausreichend genau als Konstante ermittelt werden. Damit ergibt sich die Möglichkeit, um so sicherer und genauer die Luftwechselrate zu bestimmen.

Die Berechnung mittels mehrfacher Anwendung von Gleichung 1 ist nicht explizit für die Luftwechselrate n möglich. Sie kann aber durch Zielwertsuche mit einem geeigneten Berechungsverfahren (Softwareprogramme, Excel) erfolgen.

Kommen durch Konvektion von Radon aus dem Erdreich ins Gebäude doch zeitlich variable Quellstärken zustande, können auch diese in der Größenordnung ausreichend sicher ermittelt werden. Deutliche Änderungen der Quellstärke weisen darauf hin, dass Leckagen bzw. wesentliche Luftzuflüsse mit hoher Radonkonzentration aus dem Baugrund oder anderen hoch mit Radon belasteten Räumen vorliegen.

Kurvenabschnitte (etwa bei niedriger Radonkonzentration infolge hoher Luftwechselrate), die sich nicht mit einer Aufbau-/Abklingkurve erfassen lassen, können zum Schluss der Auswertung noch berücksichtigt werden. Für sie lässt sich auf Grund der als Konstante vorliegenden bzw. abschätzbaren Quellstärke die Luftwechselrate ermitteln.

Neben der Radonkonzentration ist es von großem Vorteil, mit ihr gleichzeitig die Temperatur, die relative Luftfeuchtigkeit, den $CO_2$-Gehalt oder andere relevante Kenngrößen mit zu messen. Aus ihnen lassen sich wertvolle Hinweise auf die Lüftungsbedingungen ableiten.

Das Messen und Auswertung von Radonmesskurven ist auch auf andere Gase als Radon übertragbar, z. B. bei Prozessen, bei denen Gase freigesetzt und mit Messeinrichtungen erfasst werden können.

Rechnerische Ermittlung der Radonkonzentration und der Quellstärke

Die Hauptvoraussetzungen für die Ermittlung der Luftwechselrate und Quellstärke sind:

(1) Messdauer vorzugsweise 1 Woche mit mind. 5, möglichst bis 20 auswertbaren Messabschnitten.

Ein Beispiel für einen Ausschnitt als Messverlauf der Radonkonzentration in der Raumluft von einer Messung zeigt Figur 1.
Es können alle Abschnitte 1 bis 5 ausgewertet werden (Figur 2). Am besten bietet sich dies für den Abschnitt 2 anhand der vereinfachten Darstellung der ansteigenden Radonkonzentrationskurve an.
Der Verlauf der Radonkonzentration folgt der Beziehung:

$$Rn_t = Rn_{auß} + (Rn_o - Rn_{auß})e^{-nt} + q(1 - e^{-nt})/n \qquad (1)$$

$Rn_t$      Radonkonzentration zum Zeitpunkt t

$Rn_{auß}$      Radonkonzentration in der Außenluft

$Rn_o$      Radonkonzentration am Beginn der Messkurve

Unbekannte:

| | | |
|---|---|---|
| n | Luftwechselrate | 1/s |
| q | Quellstärke | $Bq/(m^3 s)$ |

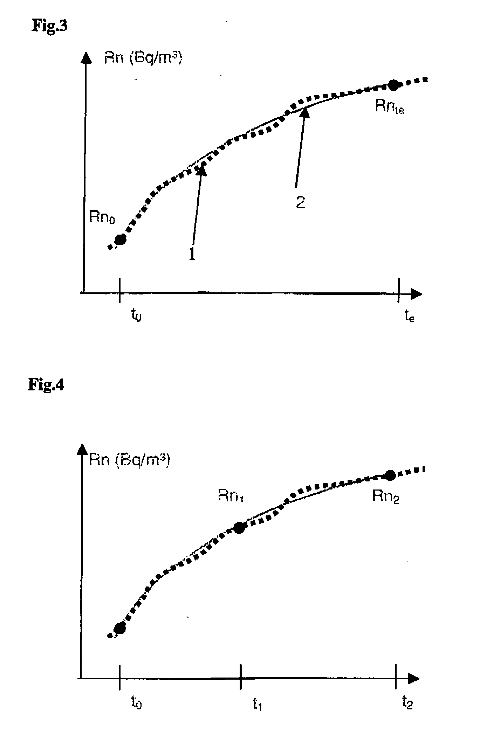

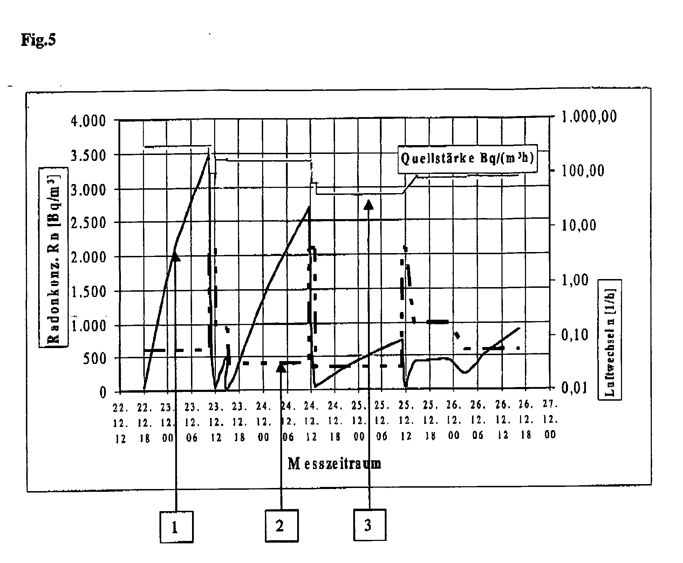

Wir haben eine Gleichung mit zwei Unbekannten. Damit gibt es keine korrekte Lösung, außer Probieren mit einer Punktwolke, mit relativ unsicherem Anfang und Ende.
Es bietet sich aber folgende Möglichkeit an, dieses Problem zu beheben:
Der einzelne Messverlauf ist so lang bzw. besteht aus so vielen Messpunkten, dass der Kurvenverlauf in zwei aufeinander folgende Kurvenstücke aufgeteilt werden kann (Figur 3). Damit hat man 2 Kurventeile, in der sowohl die Luftwechselrate und die Quellstärke gleich sind. Für die beiden Unbekannten stehen jetzt 2 Kurventeile zur Verfügung. Damit ist die Ermittlung der unbekannten Größen möglich (Figur 4).
Durch Umstellen von (1) ergibt sich

$$q = (Rn - Rn_{auß} - (Rn_o - Rn_{auß})e^{-nt})n/(1 - e^{-nt}) \qquad (2)$$

Die Radonkonzentration zum Zeitpunkt $t_1$ und $t_2$ ergibt sich nach (1) zu

$$Rn_1 = Rn_{auß} + (Rn_o - Rn_{auß})e^{-nt1} + q(1 - e^{-nt1})/n \qquad (3a)$$

$$Rn_2 = Rn_{auß} + (Rn_o - Rn_{auß})e^{-nt2} + q(1 - e^{-nt2})/n \qquad (3b)$$

$Rn_2$ nach q aufgelöst und in (3a) eingesetzt ergibt

$$Rn_1 = Rn_{auß} + (Rn_o - Rn_{auß})e^{-nt1} + (1 - e^{-nt1})[Rn_2 - Rn_{auß} - (Rn_o - Rn_{auß})e^{-nt2}]/(1 - e^{-nt2}) \qquad (4)$$

In (4) ist nur noch n unbekannt. Die Gleichung lässt sich aber nicht nach n auflösen. Die Luftwechselrate n lässt sich jedoch leicht durch Zielwertsuche ermitteln, woraus sich dann auch die Quellstärke q berechnen lässt.

Eine Auswertung von einer Messung in einem sehr dichten neuen Einfamilienhaus wird in Figur 5 dargestellt. Folgende Durchschnittswerte als gewichtete Mittelwerte wurden ermittelt:

| | | | | |
|---|---|---|---|---|
| Radonkonzentration | Bq/m$^3$ | ⌀ 950 | min 50 | max 3.500 |
| Luftwechselrate | 1/h | ⌀ 0,044 | min 0,026 | max 4,5 |
| Quellstärke | Bq/(m$^3$h) | ⌀ 143 | min 43 | max 321 |

Bei diesem Gebäude waren Leckagen zum Baugrund vorhanden. Damit können die hohen Radonkonzentrationen und die hohen, wechselnden Quellstärken erklärt werden. Außerdem ist die mittlere Luftwechselrate mit 0,044 h$^{-1}$ ungewöhnlich niedrig. Bei der sehr niedrigen Luftwechselraten von n = 0,026 h$^{-1}$ ist zu beachten, dass darin noch der Anteil des radioaktiven Zerfalls mit I = 0,0076 h$^{-1}$ von Radon enthalten ist. Es liegt hiermit kein Normalfall bzgl. der Nutzung und des Radonschutzes von einem Einfamilienhaus vor.

Bezugszeichenliste:

Bezugszeichen zu Fig. 1

    1    Einzelne Messwerte $Rn_i$
    2    Gefittete Ausgleichskurve

$$Rn_t = Rn_{auß} + (Rn_o - Rn_{auß})e^{-nt} + q(1- e^{-nt})/n$$

    3    Anfangswert der Radonkonzentration für Auswertung auf der Ausgleichskurve
    4    Endwert vom ersten und Angfangswert vom zweiten Messabschnitt (übereinander liegend)
    5    Endwert der Radonkonzentration vom zweiten Messabschnitt
    6    Zeitabschnitt vom ersten Messabschnitt
    7    Zeitabschnitt vom zweiten Messabschnitt

Bezugszeichen zu Fig. 2

    1    Messabschnitt 1
    2    Messabschnitt 2
    3    Messabschnitt 3
    4    Messabschnitt 4
    5    Messabschnitt 5

Bezugszeichen zu Fig. 3

    1    Messwerte (Punktwolke)
    2    $Rn_t$ - Ausgleichskurve

Bezugszeichen zu Fig. 5

    1    Verlauf der Radonkonzentration
    2    Verlauf der Luftwechselrate
    3    Verlauf der Quellstärke

**Patentansprüche**

1. Verfahren zur Ermittlung der Luftwechselrate in einem Raum mit Luft außerhalb des Raumes, **dadurch gekennzeichnet, dass** das radioaktive Edelgas Radon als Tracergas verwendet wird und der sich einstellende Radonkonzentrationsverlauf mit empfindlicher Radonmesstechnik so lange erfasst wird, dass sich mindestens eine beschränkt monoton wachsende bzw. fallende Kurve mit über den jeweils betrachteten Messverlauf ausreichend konstanten Parametern Luftwechselrate (n) und Radonzufluss (q) ausbilden kann, aus der diese beiden Parameter ermittelt werden können.

2. Verfahren nach Anspruch 1, **dadurch gekennzeichnet, dass** durch Aufteilen des Messzeitraumes in vorteilhaft zwei etwa gleich lange Abschnitte (6, 7) mit gut definierbaren Anfangs- und Endwerten zwei Kurventeile vorhanden sind, durch die sich mit einem mathematischem Gleichungssystem und Zielwertsuche die Parameter (n) und (q) bestimmen lassen.

3. Verfahren nach Anspruch 1 oder 2, **dadurch gekennzeichnet, dass** eine Ausgleichskurve in den punktförmigen Kurvenverlauf eingepasst (gefittet) wird, für die der Anfangs- (3) und der Endpunkt (5) sowie die Luftwechselrate (n) näherungsweise geschätzt und so lange variiert werden, bis sich die Streuung der Einzelwerte um die Kurve durch Verändern der ursprünglichen Schätzwerte nicht mehr nennenswert verringert.

4. Verfahren nach Anspruch 1, 2, oder 3, **dadurch gekennzeichnet, dass** durch Einpassen und Vergleichen von Kurven aus Kurvenscharen mit bekannten Parametern die optisch scheinbar bestmögliche ausgewählt wird.

5. Verfahren nach einem der Ansprüche 1 bis 4, **dadurch gekennzeichnet, dass** die Räume vorrangig Aufenthaltsräume in Wohnungen, öffentliche Einrichtungen, Arbeitsstätten usw. sind und das Radon aus den Baustoffen der raumumschließenden und aller weiteren Bauteile herrührt und/oder von außen in den Raum hinein gelangt.

6. Verfahren nach einem der Ansprüche 1 bis 4, **dadurch gekennzeichnet, dass** die Räume insbesondere das gesamte umschlossene Luftvolumen von Apparaturen und Einrichtungen für Boden- und Materialuntersuchungen zur Ermittlung der Radonfreisetzung sind und das Radon sich im Raum bzw. im Volumen der Messvorrichtung bildet bzw. und/oder von außen in den Raum hinein gelangt.

7. Verfahren nach einem der Ansprüche 1 bis 6, **dadurch gekennzeichnet, dass** die Messung der Radonkonzentration vorteilhaft mit um so empfindlicheren Geräten erfolgt, je niedriger die Radonkonzentrationen in der Raumluft zu erwarten ist.

8. Verfahren nach einem der Ansprüche 1 bis 7, **dadurch gekennzeichnet, dass** mit der Radonkonzentration auch weitere Kennwerte der Raumluft wie Temperatur, relative Luftfeuchte und $CO_2$-Gehalt ermittelt werden, woraus Schlussfolgerungen über die Herkunft des einfließenden Luftanteils, insbesondere aus benachbarten Räumen möglich sind.

9. Verfahren nach einem der Ansprüche 1 bis 8, **dadurch gekennzeichnet, dass** mit der Radonkonzentration auch Kennwerte der Außenluft wie Temperatur, relative Luftfeuchte und $CO_2$-Gehalt ermittelt werden, woraus Schlussfolgerungen über den Anteil des einfließenden Frischluftanteils von der Außenluft möglich sind.

10. Verfahren nach einem der Ansprüche 1 bis 9, **dadurch gekennzeichnet, dass** durch die kombinierte Auswertung der Raumluftkennwerte und geometrischer Raumparameter Aussagen über die Anwesenheit und evtl. die Anzahl von Personen möglich wird.

11. Verfahren nach einem der Ansprüche 1 bis 10, **dadurch gekennzeichnet, dass** durch die kombinierte Auswertung der Radon- und Raumluftkennwerte ermittelt wird, inwieweit die Radonkonzentration in der Raumluft von außen, insbesondere aus dem Baugrund, oder aus Baumaterialien herrührt.

12. Verfahren nach einem der Ansprüche 1 bis 11, **dadurch gekennzeichnet, dass** durch die Auswertung anderer Messungen an Baustoffen in Räumen bzw. durch Zuhilfenahme von Materialkennwerten zur Radonexhalation aus Baustoffen ermittelt wird, ob Leckagen zum Baugrund vorhanden sind bzw. wie groß diese Leckagen in etwa sein können.

13. Verfahren nach einem der Ansprüche 1 bis 12, **dadurch gekennzeichnet, dass** die Ermittlung der Konzentration und der Quellstärke auch mit anderen Gasen bzw. Luftinhaltsstoffen in Kombination mit Radon bzw. auch ohne Radon erfolgt.

**14.** Verfahren nach einem der Ansprüche 1 bis 13, **dadurch gekennzeichnet, dass** durch die Ermittlung der Luftwechselrate festgestellt werden kann, inwieweit Bestimmungen/Vorgaben/Kennwerte zur Radonkonzentration in der Raumluft eingehalten werden.

**15.** Verfahren nach einem der Ansprüche 1 bis 14, **dadurch gekennzeichnet, dass** die Freigabe von Radon aus Materialien und/oder von außen in einen Raum vorteilhaft **dadurch** ermittelt werden kann, indem die Messbedingungen bewusst so ausgestaltet werden, dass die Luftwechselrate niedrig bleibt und Parameter wie höhere Raumtemperaturen einen hohen Radoneintritt begünstigen.

**16.** Verfahren nach Anspruch 15, **dadurch gekennzeichnet, dass** das Raumvolumen so gering wie möglich ist.

**Fig.1**

**Fig.2**

Auszug aus einem Messverlauf

Messzeit (jeder Messpunkt 10 min.)

**Fig.3**

**Fig.4**

**Fig.5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **LAUSMANN, DETLEF ; BRAUN, PETER.** Luftwechselbestimmung mittels CO2. *AGÖF 6. Fachkongress,* 2001, 344-347
- **MÜNZENBERG, UWE ; THUMULLA, JÖRG.** Raumklimaaufzeichnungen als baubiologisches Werkzeug zur Problemlösung von Feuchtigkeit in Gebäuden. *AGÖF 6. Fachkongress,* 2001, 348-354

- Bewertung des Radonrisikos von Baustandorten. **SCHULZ H. ; HERMANN E. ; HÖPPNER J. ; LÖBNER W.** Forschung zum Problemkreis ''Radon''. Vortragsmanuskripte des 17. Statusgespräches, 14. Oktober 2004